# EUROPEAN PATENT SPECIFICATION

(11) **EP 3 719 398 B1**
(45) Date of publication and mention of the grant of the patent: **24.03.2021**
(21) Application number: 19181474.8
(22) Date of filing: 20.06.2019
(51) Int. Cl.: F23J 15/02, B01D 46/34, B01D 53/08

(54) **MOVING GRANULAR BED DUST FILTRATION DEVICE WITH AUTOMATIC PARTICLE SIZE STRATIFICATION AND STRATIFIED FILTER MATERIAL REPLACEMENT**
STAUBFILTRATIONSVORRICHTUNG EINES KÖRNIGEN WIRBELBETTS MIT AUTOMATISCHER PARTIKELGRÖSSENSCHICHTUNG UND GESCHICHTETEM FILTERMATERIALERSATZ
DISPOSITIF DE FILTRATION DE POUSSIÈRE DE LIT GRANULAIRE EN MOUVEMENT COMPORTANT UNE STRATIFICATION AUTOMATIQUE DE LA TAILLE DES PARTICULES ET UN REMPLACEMENT DU MATÉRIAU DE FILTRE STRATIFIÉ

(30) Priority: 03.04.2019 CN 201910267398
(43) Date of publication of application: 07.10.2020
(73) Proprietor: University of Science & Technology Beijing, Haidian District Beijing 100083 (CN)
(72) Inventor: WANG, Li, Beijing, 100083 (CN); WU, Ping, Beijing, 100083 (CN); TONG, Lige, Beijing, 100083 (CN); YIN, Shaowu, Beijing, 100083 (CN); LIU, Chuanping, Beijing, 100083 (CN)
(74) Representative: Berkkam, Ayfer

(56) References cited:
- GB-A- 695 355
- US-A- 4 601 736
- US-A1- 2012 213 675

## Description

### Technical Field

The present invention relates to the technical field of filtration and purification of a gas containing dust, and in particular to a moving granular bed dust filtration device with an automatic particle size stratification and a stratified filter material replacement.

### Background

In 2010, the energy consumption of the industries such as metallurgy industry, chemical industry, building materials industry, etc. accounted for about 70% of the total industrial energy consumption in China, and accounted for 46% of the energy consumption of the same industries in the world. According to the statistical data in 2015, the residual energy emission accounted for 48% of the total industrial energy consumption in China, equivalent to the energy of 970 million tons of standard coal. The average energy utilization efficiency of industrial furnaces was merely 33%, and the heat loss of flue gas emission accounted for about 17% of the total industrial energy consumption and about 35% of the industrial residual energy emission. The heat loss of flue gas emission was equivalent to 340 million tons of standard coal. The flue gas emission accounts for the largest heat loss in industrial furnaces. At present, good research results have been achieved on the recovery and utilization of the residual heat of the medium-temperature and low-temperature flue gas, and the techniques for the recovery and utilization of the residual heat of the medium-temperature and low-temperature flue gas have been well popularized and used. However, the problem of the residual heat recovery of the high-temperature flue gas (800-1400°C) has not been well solved.

Among the numerous dust removal techniques, the moving granular bed dust removal technique has a lot of advantages such as high-temperature resistance, corrosion resistance, stable performance, easy maintenance, low fabrication cost, prone to having large size, etc. The moving granular bed dust removal technique is one of the well-known and most promising high-temperature dust removal techniques in the industry.

However, the moving granular bed dust removal technique has not been widely promoted in industrial applications currently, and the main reasons are as follows. The flow of the filter material granules leads to a large gap between the granules, the filtration effect on the fine dust particles is poor, and the dust particles caused by the flow of the filter material granules are re-carried by the gas flow, affecting the separation efficiency. The non-uniformity of the flow of the filter material granules affects the dust removal stability of the moving bed. The high-temperature flue gas adheres to the filter material granules, thereby blocking the flow passage. The heat transfer occurs between the filter material granules and the high-temperature flue gas, and this part of heat is lost during the replacement of the filter material, thereby reducing the recovery rate of the residual heat of the high-temperature flue gas.

The filter medium of the moving granular bed is generally solid particles having very stable physical and chemical properties, and the particle size of the filter material is an important factor affecting the dust-removal performance of the moving bed. Generally, when filter materials with large particle size are used, the adhesive dust is less likely to cause the blocking of the filter material granules and affect the flow, the gas flow resistance of the granular layer is small, the dust holding capacity of the granular layer is high, the required replacement amount of the filter material is small, and the heat loss of the replacement of the filter material is less. However, the filtration efficiency is low, especially for the filtration of the micron and submicron level dust particles. When filter materials with small particle size are used, the filtration efficiency is high, and it is beneficial to increase the filtration efficiency of the micron and submicron dust particles. However, the gas flow resistance is large, the dust holding capacity is low, the replacement amount of the filter material is large, the heat loss of the replacement is large, and the dust may get easily adhered to the filter material, causing the blocking of the flow passage.

In the moving granular bed, the stratified filtration manner by combining the filter materials with large particle size and small particle size is used, which can effectively avoid the above disadvantages of the filter layer of the large granules and the filter layer of the small granules, and exert their respective advantages. By using the large granules, the dust holding capacity is increased, and the resistance loss and the heat loss of the replacement of the filter material are reduced. By using the small granules, the filtration effect is improved. The structure of the stratified filtration combining the filter material with large particle size and the filter material with small particle size can effectively solve the problem that restricts the industrialization process of the moving granular bed dust removal technique. However, in the case of continuous operation at high temperatures, it is difficult or impossible to distribute the material on different layers according to particle size.

However, the two-component/distributed particle size mixed granules composed of granules of different particle sizes may cause separation/stratification phenomenon between the granules of different particle sizes in the stacking and flowing process. The spontaneous separation and stratification properties of the two-component/distributed particle size mixed granules in the stacking and flowing process can solve the problem of practical application and operation on the distribution of the material on different filter layers in the high-temperature environment.

In addition, since the unevenness of the distribution of the dust in the granular layer along the flow direction of the flue gas, a distribution of the dust holding capacity can be formed in the filter layer. By adjusting the particle size distribution of the filter material and the distribution of the dust holding capacity in the filter material, and selectively replacing the granules in the high dust content filter layer partially, the dust holding capacity of the filter material can be increased and the replacement rate can be reduced, thereby reducing the gas flow resistance and the heat loss in the replacement.

US patent application publication no. 2012/0213675 A1 discloses a compact two-stage granular moving-bed apparatus known in the state of the art. The compact two-stage granular moving-bed apparatus includes a vessel, a flow-corrective element, and a filter material supplying part. The vessel includes a hollow interior, a gas outlet, a first media outlet and a second media outlet. The flow-corrective element divides the hollow interior into a first channel and a second channel. The filter material supplying part has a first provider for providing a first granular material flowing through the first channel and a second provider for providing a second granular material flowing through the second channel, wherein a vertical level of each first and second provider is adjustable so that a first flow path that an exhaust gas flows through the first granular material and a second flow path that the exhaust gas flow through the second granular material is respectively capable of being controlled.

US patent publication no. US 4,601,736 A discloses a dynamic gas apparatus known in the state of the art. GB patent application publication no. GB 695355 A discloses an apparatus for the treatment of gases known in the state of the art.

Therefore, based on the spontaneous separation/stratification properties of the mixed granules in the stacking and flowing process, the present invention provides a moving granular bed dust filtration device with an automatic particle size stratification and a stratified filter material replacement.

### Summary

The present invention is aimed to provide a moving granular bed dust filtration device with an automatic particle size stratification and a stratified filter material replacement, so as to solve the problems of low dust holding capacity, high replacement rate, large loss of the residual heat in the replacement, excessive moving parts, complicated structure, invariable granular layer thickness, unstable operation, low filtration efficiency and the like when the filtration is performed in the granular layer of the existing moving bed.

The device includes a particle size distribution pre-separation zone, a filtration zone and a material discharging zone successively from top to bottom. The particle size distribution pre-separation zone includes a feeding port, an offset feeding passage and a particle size distribution pre-separator. The filtration zone includes a flue gas inlet passage, a flue gas inlet, a flue gas outlet, and a flue gas outlet passage. The material discharging zone includes an anti-arching movable wall plate, a left discharging port movable wall plate, a discharging port, a right discharging port movable wall plate, and a stratified discharging telescopic adjusting wall plate. The discharging port is opposite to a moving discharging platform, and the feeding port is located at the top of the device. A lower portion of the feeding port is connected to the offset feeding passage, and a lower portion of the offset feeding passage is connected to the particle size distribution pre-separator. A material layer thickness adjusting baffle plate is provided between the particle size distribution pre-separation zone and the filtration zone. An end of the flue gas inlet passage is the flue gas inlet, and an end of flue gas outlet passage is the flue gas outlet. An anti-arching movable wall plate movable hinge is provided on an upper part of the anti-arching movable wall plate, and a connecting hinge hinging the anti-arching movable wall plate with a discharging section is provided between the anti-arching movable wall plate and the left discharging port movable wall plate. The discharging port is provided between the left discharging port movable wall plate and the right discharging port movable wall plate. A movable hinge hinging the stratified discharging telescopic adjusting wall plate with the right discharging port movable wall plate is provided between the right discharging port movable wall plate and the stratified discharging telescopic adjusting wall plate, and a stratified discharging telescopic adjusting wall plate movable hinge is provided at an upper part of the stratified discharging telescopic adjusting wall plate.

Specifically, the offset feeding passage is provided above the particle size distribution pre-separator close to a side of the flue gas outlet.

The anti-arching movable wall plate movable hinge enables the anti-arching movable wall plate to adjust an angle in a vertical direction to prevent filter material granules from forming an arch at the material discharging zone and causing a block.

A method of using the device is as follows:
The filter material granules flow through a bed body from top to bottom from the offset feeding passage. The dusty gas flows through a granule filter layer in a cross flow to realize a filtration and purification. The filter material granules and the dust collected after the purification flow into the material discharging zone are discharged out through the moving discharging platform.

The adjusting baffle plate can move up and down to adjust a stacking thickness of the filter layer in the filtration zone, realizing different filtration efficiencies and bed resistances, and thus satisfying different application scenarios.

By adjusting a speed of the moving discharging platform, a downward moving speed of the filter material granules in the bed is adjusted, realizing an optimal filtration efficiency and a maximum dusty gas treatment capacity, and preventing the flying dust.

A discharging speed distribution at a bottom of the filtration zone is adjusted by an angle adjustment of the anti-arching movable wall plate and the stratified discharging telescopic adjusting wall plate, and a width adjustment of the discharging port.

A size and a position of the discharging port can be changed by cooperatively adjusting the anti-arching movable wall plate and the stratified discharging telescopic adjusting wall plate, realizing an adjustment of the discharging speed of the filter material granules in a horizontal direction in the material discharging zone, and realizing the function of the stratified replacement of the filter material.

The filter material granules discharged from the moving discharging platform and the dust collected after the purification are discharged out of the bed, and then the filter material granules return back to the offset feeding passage at the upper part after filter material regeneration and purification, realizing the recycling of the filter material granules.

During the operation of the device, the filter material granules slowly flow from top to bottom through the particle size distribution pre-separator, the filter layer, and a material stratification controlling zone into the material discharging zone, and then are discharged from the moving discharging platform. The particle size distribution pre-separator can automatically prestratify the filter material to form a pre-distribution that the large granules are substantially at upper layer and the small granules are substantially at lower layer. The filter layer is for filtering dust-containing flue gas, and realizing a further automatic particle size stratification. The material layer thickness adjusting baffle plate can move up and down to adjust the stacking thickness of the granule filter layer in the bed body, i.e., the length of the dust-containing gas flowing through the filter layer. The moving speed of the moving discharging platform can control the downward moving speed of the filter material granules in the bed. The dusty gas flows through the granule filter layer in a cross flow for filtration and purification.

After the filter material granules pass through the particle size distribution pre-separator and the filter layer, a stratified structure with the large granules at upper layer and the small granules at lower layer is formed. This structure reduces the resistance of the filter layer while effectively increasing the dust holding capacity of the material layer. Stratified and directed controllable replacement is performed on the filter layer, which can effectively reduce the replacement rate of the filter material, reduce the discharging heat loss, and improve the recovery and utilization rate of the residual heat of the flue gas after the purification.

The filter material granules of different materials, such as corundum, silicon carbide, silicon nitride, quartz sand, ceramic, glass, coal powder, metal, resin, etc., can be used to adapt to different working temperatures. Filter granules with different sizes can be mixed to meet different filtration conditions. The size of the filter material granules ranges from 0.1 mm to 100 mm. The thickness of the granule filter layer can be adjusted by adjusting the baffle plate to reach different filtration efficiencies and bed resistances. The thickness of the granule filter layer ranges from 10 mm to 1000 mm.

When the moving granular bed dust filtration system with the automatic particle size stratification and the stratified filter material replacement is used in a high-temperature environment (e.g., 400°C-1500°C), since the system has no components such as baffle screen, baffle plate, orifice plate and the like in the high temperature zone, the system does not need to be cooled, and the operation of the system is safe and reliable.

When the granule filter layer is in a moving state, the dust can be prevented from forming into a filter cake on the surface of the filter granules, the bed resistance can be reduced and the stable operation of the system can be maintained under the premise of ensuring the filtration effect. The dust to be treated includes, but is not limited to, non-condensed dust such as coal ash, carbon powder, coal powder, iron oxide powder, silicon oxide powder, inorganic non-metallic powder, etc., and condensed dust such as resin powder, tar vapor, alkali metal vapor, molten metal, submerged arc furnace soot, etc.

The filter material granules discharged from the discharging port and the dust collected after the purification are separated by a filter material regeneration treatment (e.g., vibrating screen, drum screen, fluidized bed, and pulsed airflow impact). Then, the regenerated filter material granules are transported back to the offset feeding passage at the upper part for recycling of the filter material granules. For the coal gasification system, if raw coal is used as the filter material granules, the discharged filter material granules are directly used in the production process without regeneration treatment.

The beneficial effects of the above technical solution of the present invention are as follows:
In the above technical solution, various high-temperature dusty gases (e.g., coal gas and flue gas) having different dust contents, different components, and different initial temperatures may be filtrated and purified in the granular layer of the moving bed. The technical solution of the present invention has the advantages of simple structure, convenient operation, adjustable thickness of the granular layer, and having no components such as baffle screen, baffle plate, orifice plate and the like. The device of the present invention can satisfy a wide temperature range, and has a high filtration efficiency, a reduced filtration pressure, and continuous and stable operation. The phenomena such as the saturated filtering capability and the short circuit of local dusty gas will not occur. Compared with other existing filteration techniques in the art, the moving bed granular layer filtration and purification technique of the present invention has obvious advantages in the range of 800-1200°C, and can replace expensive metal or ceramic filters. The device of the present invention can be used in gas purification or resource recovery systems in the fields of IGCC (Integrated Gasification Combined Cycle), metallurgy, chemical industry, building materials, urban environmental protection, etc., having a great significance for reducing dust emissions and recycling valuable raw materials.

The greatest technical advantages of the present invention are as follows: (1) the automatic stratification of the filter material granules in the filter layer is realized by utilizing the stratification property during the flow of granular matter; (2) the dust holding capacity of the filter layer is increased without increasing the resistance because the continuous stratified distribution of the large granules at upper layer and the small particles at lower layer is formed in the filter layer; (3) due to the increase of the dust holding capacity, the replacement rate of filter material is reduced, thereby reducing the discharging heat loss, reducing the temperature drop of the flue gas after the filtration, and improving the recovery and utilization of the residual heat of the flue gas; and (4) the stratified controllable discharge of the filter material in the filter layer is realized by a cooperative use of the anti-arching movable wall plate and the stratified discharging telescopic adjusting wall plate, thereby adjusting the dust distribution in the filter layer, and achieving optimal operating conditions of high dust holding capacity and low replacement rate of the filter material.

### Brief Description of the Drawings

FIG. 1 is a structural schematic diagram of a moving granular bed dust filtration device with an automatic particle size stratification and a stratified filter material replacement according to the present invention; and
FIG. 2 is a schematic diagram showing an automatic granule stratification in a moving granular bed dust filtration device with an automatic particle size stratification and a stratified filter material replacement according to the present invention.

In the figures: 1-feeding port; 2-offset feeding passage; 3- particle size distribution pre-separator; 4-filter material free surface in particle size distribution pre-separator; 5-material layer thickness adjusting baffle plate; 6-flue gas inlet passage; 7- filtration zone inlet filter material free surface; 8-flue gas inlet; 9-anti-arching movable wall plate movable hinge; 10-anti-arching movable wall plate; 11-connecting hinge hinging anti-arching movable wall plate with discharging section; 12-left discharging port movable wall plate; 13-discharging port; 14-moving discharge platform; 15-right discharging port movable wall plate; 16-movable hinge hinging stratified discharging telescopic adjusting wall plate with right discharging port movable wall plate; 17-stratified discharging telescopic adjusting wall plate; 18-material discharging zone; 19-stratified discharging telescopic adjusting wall plate after angle adjustment; 20-stratified discharging telescopic adjusting wall plate movable hinge; 21-flue gas outlet; 22- filtration zone outle filter material free surface; 23-filtration zone; 24-flue gas outlet passage; and 25- particle size distribution pre-separation zone.

### Detailed Description of the Embodiments

In order to make the technical problems to be solved, technical solutions and advantages of the present invention clearer, the present invention will be described in detail with reference to the drawings and specific embodiments as follows.

The present invention provides a moving granular bed dust filtration device with an automatic particle size stratification and a stratified filter material replacement in order to solve the problems of low dust holding capacity, large bed resistance, high filter material replacement rate, large residual heat loss and the like in the existing moving bed granular layer filteration techniques.

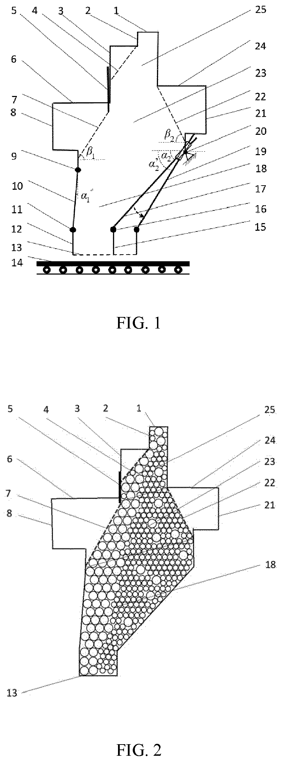

As shown in FIG. 1, the device includes the particle size distribution pre-separation zone 25, the filtration zone 23 and the material discharging zone 18 successively from top to bottom. The particle size distribution pre-separation zone 25 includes the feeding port 1, the offset feeding passage 2 and the particle size distribution pre-separator 3. The filtration zone 23 includes the flue gas inlet passage 6, the flue gas inlet 8, the flue gas outlet 21, and the flue gas outlet passage 24. The material discharging zone 18 includes the anti-arching movable wall plate 10, the left movable wall plate 12 of a discharging port, the discharging port 13, the right movable wall plate 15 of the discharging port, and the stratified discharging telescopic adjusting wall plate 17. The discharging port 13 is opposite to the moving discharging platform 14, and the feeding port 1 is located at the top of the device. A lower portion of the feeding port 1 is connected to the offset feeding passage 2, and a lower portion of the offset feeding passage 2 is connected to the particle size distribution pre-separator 3. The material layer thickness adjusting baffle plate 5 is provided between the particle size distribution pre-separation zone 25 and the filtration zone 23. An end of the flue gas inlet passage 6 is the flue gas inlet 8, and an end of the flue gas outlet passage 24 is the flue gas outlet 21. The anti-arching movable wall plate movable hinge 9 is provided on an upper part of the anti-arching movable wall plate 10, and the connecting hinge 11 hinging the anti-arching movable wall plate with a discharging section is provided between the anti-arching movable wall plate 10 and the left movable wall plate 12 of the discharging port. The discharging port 13 is provided between the left movable wall plate of the discharging port 12 and the right movable wall plate of the discharging port 15, the movable hinge 16 hinging the stratified discharging telescopic adjusting wall plate with the right movable wall plate of the discharging port is provided between the right movable wall plate of the discharging port 15 and the stratified discharging telescopic adjusting wall plate 17, and the stratified discharging telescopie adjusting wall plate movable hinge 20 is provided at an upper part of the stratified discharging telescopic adjusting wall plate 17.

The filter material free surface 4 is formed in the particle size distribution pre-separator 3. The filtration zone inlet filter material free surface 7 is formed in the filtration zone 23 at a side close to the flue gas inlet 8. The filtration zone outlet filter material free surface 22 is formed in the filtration zone 23 at the flue gas outlet 21. The stratified discharging telescopic adjusting wall plate 17 turns to the stratified discharging telescopic adjusting wall plate 19 after the angle adjustment.

In the process of the specific application, the filter material granules enter from the feeding port 1 and the offset feeding passage 2. The pre-stratification where the large granules are mainly on the surface of the filter layer and the small granules are mainly at the bottom of the filter layer is achieved during the downward flow process in the particle size distribution pre-separator 3 (see FIG. 2). After that, the filter material granules enter the filtration zone 23, and are further stratified in the filtration zone 23 to form the distribution that the large granules are on the surface of the filter layer and the small granules are at the bottom layer of the filter layer, thus advantageous to reducing the resistance of the filter layer while increasing the dust holding capacity. The material layer thickness adjusting baffle plate 5 can adjust the average thickness of the filter layer by moving up and down. The dust-containing flue gas enters the filtration zone through the flue gas inlet 8 and the flue gas inlet passage 6, and is discharged out of the system through the flue gas outlet passage 24 and the flue gas outlet 21 after subjected to filtration, dust removal and purification. During stable operation, the dust in the filtration zone is mainly distributed in the large granule layer on the surface of the filter layer, and the small granule layer mainly functions as a depth filter. The anti-arching movable wall plate 10 has two functions: the first one is to prevent the filter material flowing downward from forming an arch and causing the blocking by adjusting the angle α₁; and the second one is to cooperate with the stratified discharging telescopic adjusting wall plate 17 to control the stratified discharging of the filter layer, i.e., to increase the replacement rate of the upper filter layer with a large dust content, and to reduce the replacement rate of the bottom filter layer with a small dust content. The stratified discharging telescopic adjusting wall plate 17 has functions as follows: one is to adjust the stratified discharging distribution by adjusting the angle α₂, and the other is to ensure an invariable height of the discharging port by the telescopic adjustment. The filter material granules are discharged out of the filteration device through the discharging port 13. The total replacement rate of the filter material is controlled by the translational speed of the moving discharge platform 14.

The filter material granules of different materials, such as corundum, silicon carbide, silicon nitride, quartz sand, ceramic, glass, coal powder, metal, resin, etc., can be used to adapt to different working temperatures. Filter granules with different sizes are used for mixing to form different fill rates or void ratios, which can be adapted to different filtration conditions. The size of the filter material granules ranges from 0.1 mm to 100 mm. The thickness of the granule filter layer can be adjusted by adjusting the baffle plate to reach different filtration efficiencies and bed resistances. The thickness of the granule filter layer ranges from 10 mm to 1000 mm.

When the granule filter layer is in a moving state, the dust can be prevented from forming into a filter cake on the surface of the filter granules, the bed resistance can be reduced and the stable operation of the system can be maintained under the premise of ensuring the filtration effect. The dust to be treated includes, but is not limited to, non-condensed dust such as coal ash, carbon powder, coal powder, iron oxide powder, silicon oxide powder, inorganic non-metallic powder, etc., and condensed dust such as resin powder, tar vapor, alkali metal vapor, molten metal, submerged arc furnace soot, etc.

The filter material granules discharged from the discharging port 13 and the dust collected after the purification are separated by a filter material regeneration treatment (e.g., vibrating screen, drum screen, fluidized bed, and pulsed airflow impact). Then, the regenerated filter material granules are transported back to the feeding port 1 at the upper part for recycling of the filter material granules. For the coal gasification system, if raw coal is used as the filter material granules, the discharged filter material granules are directly used in the production process without regeneration treatment.

## Claims

1. A moving granular bed dust filtration device with an automatic particle size stratification and a stratified filter material replacement, comprising: a particle size distribution pre-separation zone (25), a filtration zone (23) and a material discharging zone (18), from top to bottom successively; the particle size distribution pre-separation zone (25) comprises a feeding port (1), an offset feeding passage (2) and a particle size distribution pre-separator (3); the filtration zone (23) comprises a flue gas inlet passage (6), a flue gas inlet (8), a flue gas outlet (21), and a flue gas outlet passage (24); the discharging zone (18) comprises an anti-arching movable wall plate (10), a left discharging port movable wall plate (12), a discharging port (13), a right discharging port movable wall plate (15), and a stratified discharging telescopic adjusting wall plate (17); the discharging port (13) is opposite to a moving discharging platform (14), the feeding port (1) is located at a top of the device, a lower portion of the feeding port (1) is connected to the offset feeding passage (2), and a lower portion of the offset feeding passage (2) is connected to the particle size distribution pre-separator (3); a material layer thickness adjusting baffle plate (5) is provided between the particle size distribution pre-separation zone (25) and the filtration zone (23), an end of the flue gas inlet passage (6) is the flue gas inlet (8), and an end of the flue gas outlet passage (24) is the flue gas outlet (21); an anti-arching movable wall plate movable hinge (9) is provided at an upper part of the anti-arching movable wall plate (10), a connecting hinge (11) hinging the anti-arching movable wall plate with a discharging section is provided between the anti-arching movable wall plate (10) and the left discharging port movable wall plate (12), the discharging port (13) is provided between the left discharging port movable wall plate (12) and the right discharging port movable wall plate (15), and a movable hinge (16) hinging the stratified discharging telescopic adjusting wall plate and the right discharging port movable wall plate is provided between the right discharging port movable wall plate (15) and the stratified discharging telescopic adjusting wall plate (17), and a stratified discharging telescopic adjusting wall plate movable hinge (20) is provided at an upper part of the stratified discharging telescopic adjusting wall plate (17).

2. The moving granular bed dust filtration device with the automatic particle size stratification and the stratified filter material replacement of claim 1, wherein, the offset feeding passage (2) is offset above the particle size distribution pre-separator (3) toward a most distal end of the flue gas outlet (21).

3. The moving granular bed dust filtration device with the automatic particle size stratification and the stratified filter material replacement of claim 1, wherein, the anti-arching movable wall plate movable hinge (9) enables the anti-arching movable wall plate (10) to adjust an angle in a vertical direction to prevent filter material granules from forming an arch at the material discharging zone and causing a blocking.

4. The moving granular bed dust filtration device with the automatic particle size stratification and the stratified filter material replacement of claim 1, wherein, the filter material used in the filtration zone (23) is one item selected from the group consisting of corundum, silicon carbide, silicon nitride, quartz sand, ceramic, glass, coal powder, metal, and resin; the size of the filter material granules ranges from 0.1 mm to 100 mm; and the thickness of the filter layer of the filter material granules ranges from 10 mm to 1000 mm.

5. The moving granular bed dust filtration device with the automatic particle size stratification and the stratified filter material replacement of claim 1, wherein, the device is not only suitable for treating non-condensed dust, but also suitable for treating condensed dust.

6. The moving granular bed dust filtration device with the automatic particle size stratification and the stratified filter material replacement of claim 1, wherein the device is configured such that:
the filter material granules flow through a bed body from top to bottom from the offset feeding passage (2), a dusty gas flows through a granule filter layer in a cross flow to realize a filtration and purification, and the filter material granules and dust collected after the purification flow into the material discharging zone and discharging out from the moving discharging platform (14).

7. The moving granular bed dust filtration device with the automatic particle size stratification and the stratified filter material replacement of claim 1, wherein, the material layer thickness adjusting baffle plate (5) is configured to move up and down.

8. The moving granular bed dust filtration device with the automatic particle size stratification and the stratified filter material replacement of claim 1, wherein, a size and a position of the discharging port (13) are changed by a cooperation of the anti-arching movable wall plate (10) with the stratified discharging telescopic adjusting wall plate (17), realizing an adjustment of the discharging speed of the filter material granules in a horizontal direction in the material discharging zone (18), and realizing the function of the stratified filter material replacement.

9. The moving granular bed dust filtration device with the automatic particle size stratification and the stratified filter material replacement of the of claim 1, wherein, a downward moving speed of the filter material granules in the bed is adjusted by adjusting a speed of the moving discharging platform (14).

## Patentansprüche

1. Eine bewegliche Filtrationseinrichtung für granulatförmige Bettstäube mit einer automatischen Partikelgrößenschichtung und einem geschichteten Filtermaterialersatz, bestehend aus: einer Partikelgrößenverteilung-Vorabscheidungszone (25), einer Filtrationszone (23) und einer Materialentladungszone (18), von oben nach unten übereinander. Die Partikelgrößenverteilung-Vorabscheidungszone (25) umfasst eine Zuführöffnung (1), einen versetzte Zuführdurchgang (2) und einen Partikelgrößenverteilungsvorabscheider (3); Die Filtrationszone (23) umfasst einen Abgaseinlass (6), einen Abgaseinlass (8), einen Abgasauslass (21) und einen Abgasauslass (24); Die Entladungszone (18) umfasst eine bewegliche Wandplatte (10) gegen Wölbung, eine bewegliche Wandplatte (12) für die linken Entladungsöffnung , eine Entladungsöffnung (13), eine bewegliche Wandplatte (15) für die rechte Entladungsöffnung und eine geschichtete Teleskopeinstellentladungswandplatte (17); Die Entladungsöffnung (13) liegt einer beweglichen Entladungsplattform (14) gegenüber, die Zuführöffnung (1) befindet sich an der Oberseite des Gerätes, ein unterer Teil des Zuführöffnung (1) ist mit dem versetzten Zuführdurchgang (2) verbunden, und ein unterer Teil des versetzten Zuführdurchgang (2) ist mit dem Partikelgrößenverteilungsvorabscheider (3) verbunden; Eine Materialschichtdickeneinstellplatte (5) ist zwischen der Partikelgrößenverteilung-Vorabscheidungszone (25) und der Filtrationszone (23) vorgesehen, ein Ende des Abgaseinlasses (6) ist der Abgaseinlass (8) und ein Ende des Abgasauslass (24) ist der Abgasauslass (21); Eine bewegliche Wandplatte bewegliches Scharnier (9) gegen Wölbung ist an einem oberen Teil der beweglichen Wandplatte (10) gegen Wölbung, ein Verbindungsscharnier (11), das die bewegliche Wandplatte gegen Wölbung an einem Entladeabschnitt hängt, ist zwischen der beweglichen Wandplatte (10) gegen Wölbung und bewegliche Wandplatte (12) der linken Entladungsöffnung, die Entladungsöffnung (13) ist zwischen bewegliche Wandplatte (12) der linken Entladungsöffnung und der beweglichen Wandplatte (15) der rechten Entladeöffnung vorgesehen, und ein bewegliches Scharnier (16), das die geschichtete Entladung-Teleskopeinstellentladungswandplatte und die bewegliche Wandplatte der rechten Entladungsöffnung klappt, ist zwischen der beweglichen Wandplatte (15) der rechten Entladungsöffnung und der geschichtete Entladung-Teleskopeinstellentladungswandplatte (17) vorgesehen, und eine bewegliche Entladung-Teleskopeinstellentladungswandplatte (20) ist an einem oberen Teil der geschichteten Entladung-Teleskopeinstellentladungswandplatte (17) vorgesehen.

2. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** der versetzten Zuführdurchgang (2) oberhalb des Partikelgrößenverteilungsvorabscheiders (3) zu einem am weitesten gelegenen distalen Ende des Abgasauslasses (21) versetzt wird.

3. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** das bewegliche Scharnier (9) der beweglichen Wandplatte (10) gegen Wölbung ermöglicht, einen Winkel in vertikaler Richtung einzustellen, um zu verhindern, dass Filtermaterialgranulat einen Bogen an der Materialentladungszone bildet und eine Blockierung verursacht.

4. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** das in der Filtrationszone (23) verwendete Filtermaterial ein Gegenstand ist, der aus der Gruppe ausgewählt wird, die aus Korund, Siliziumkarbid, Siliziumnitrid, Quarzsand, Keramik, Glas, Kohlepulver, Metall und Harz besteht; Die Größe des Filtermaterialgranulat reicht von 0,1 mm bis 100 mm und die Dicke der Filterschicht des Filtermaterialgranulat reicht von 10 mm bis 1000 mm.

5. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** das Gerät nicht nur zur Behandlung von nicht kondensiertem Staub geeignet ist, sondern auch zur Behandlung von kondensiertem Staub.

6. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** das Gerät so konfiguriert ist, dass: das Filtermaterialgranulate von oben nach unten durch einen Bettkörper aus dem versetzten Zuführdurchgang (2) fließen, das staubige Gas durch eine Granulat-Filterschicht in einem Querstrom fließt, um eine Filtration und Reinigung zu realisieren, und das Filtermaterialgranulat und der Staub, die nach der Reinigung gesammelt wurden, in die Materialentladungszone fließen und von der beweglichen Entladungsplattform (14) entladen werden.

7. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** die Materialschichtdickeneinstellplatte (5) so konfiguriert ist, dass sie sich nach oben und unten bewegt.

8. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** eine Größe und eine Position der Entladungsöffnung (13) durch eine Zusammenwirkung der beweglichen Wandplatte (10) gegen Wölbung mit der geschichteten Teleskopeinstellentladungswandplatte (17) geändert werden, wobei die Einstellung der Entladegeschwindigkeit des Filtermaterialgranulats in horizontaler Richtung in der Materialentladungszone (18) und die Funktion des geschichteten Filtermaterialersatz realisiert werden.

9. Die bewegliche Filtrationseinrichtung für granulatförmige Bettstäube mit der automatischen Partikelgrößenschichtung und dem geschichteten Filtermaterialersatz nach Anspruch 1, **dadurch gekennzeichnet, dass** die Abwärtsbewegungsgeschwindigkeit des Filtermaterialgranulats im Bett durch Einstellen der Geschwindigkeit der beweglichen Entladungsplattform (14) eingestellt wird.

## Revendications

1. Dispositif de filtration de poussière à lit granulaire mobile avec une stratification granulométrique automatique et un remplacement de matériau filtrant stratifié, comprenant: une zone de pré-séparation de distribution granulométrique (25), une zone de filtration (23) et une zone de décharge de matériau (18), de haut en bas successivement; la zone de pré-séparation de distribution granulométrique (25) comprend un orifice d'entrée (1), un passage d'entrée décalée (2) et un pré-séparateur de distribution granulométrique (3); la zone de filtration (23) comprend un passage d'entrée de fumée (6), une entrée de fumée (8), une sortie de fumée (21) et un passage de sortie de fumée (24); la zone de décharge (18) comprend une plaque de paroi mobile anti-cambrure (10), une plaque de paroi mobile d'orifice de décharge gauche (12), un orifice de décharge (13), une plaque de paroi mobile d'orifice de décharge droite (15) et une plaque de paroi de réglage télescopique de décharge stratifiée (17); l'orifice de décharge (13) est opposé à une plate-forme de décharge mobile (14), l'orifice d'entrée (1) est situé en haut du dispositif, une partie inférieure de l'orifice d'entrée (1) est reliée au passage d'entrée décalée (2), et une partie inférieure du passage d'entrée décalée (2) est reliée au pré-séparateur de distribution granulométrique (3); une plaque déflectrice de réglage de l'épaisseur de la couche de matériau (5) se situe entre la zone de pré-séparation de distribution granulométrique (25) et la zone de filtration (23), une extrémité du passage d'entrée de fumée (6) est l'entrée de fumée (8), et une extrémité du passage de sortie de fumée (24) est la sortie de fumée (21); une charnière mobile de plaque de paroi mobile anti-cambrure (9) se situe à la partie supérieure de la plaque de paroi mobile anti-cambrure (10), une charnière de liaison (11) articulant la plaque de paroi mobile anti-cambrure avec une section de décharge se situe entre la plaque de paroi mobile anti-cambrure (10) et la plaque de paroi mobile de l'orifice de décharge gauche (12), l'orifice de décharge (13) se situe entre la plaque de paroi mobile de l'orifice de décharge gauche (12) et
la plaque de paroi mobile de l'orifice de décharge droite (15), et une charnière mobile (16) articulant la plaque de paroi de réglage télescopique de décharge stratifiée et la plaque de paroi mobile de l'orifice de décharge droite se situe entre la plaque de paroi mobile (15) et la plaque de paroi de réglage télescopique à décharge stratifiée (17), et une charnière mobile de plaque de paroi de réglage télescopique à décharge stratifiée (20) se situe à la partie supérieure de la plaque de paroi de réglage télescopique à décharge stratifiée (17).

2. Dispositif de filtration de poussière à lit granulaire mobile avec une stratification granulométrique automatique et un remplacement de matériau filtrant stratifié selon la revendication 1, dans lequel, le passage d'entrée décalée (2) est fixé au-dessus du pré-séparateur de distribution granulométrique (3) vers l'extrémité la plus distale de la sortie de fumée (21).

3. Dispositif de filtration de poussière à lit granulaire mobile avec une stratification granulométrique automatique et un remplacement de matériau filtrant stratifié selon la revendication 1, dans lequel, la charnière mobile de plaque de paroi mobile anti-cambrure (9) permet à la plaque de paroi mobile anti-cambrure (10) d'ajuster un angle dans une direction verticale pour empêcher les granules de matériau filtrant de former un arc dans la zone de décharge de matériau et de provoquer un blocage.

4. Dispositif de filtration de poussière à lit granulaire mobile avec une stratification granulométrique automatique et un remplacement de matériau filtrant stratifié selon la revendication 1, dans lequel, le matériau filtrant utilisé dans la zone de filtration (23) est un élément choisi dans le groupe qui se compose de corindon, carbure de silicium, nitrure de silicium, sable de quartz, céramique, verre, poudre de charbon, métal et résine; la taille des granulés de matériau filtrant va de 0,1 mm à 100 mm; et l'épaisseur de la couche filtrante des granulés de matériau filtrant va de 10 mm à 1000 mm.

5. Dispositif de filtration de poussière à lit granulaire mobile avec une stratification granulométrique automatique et un remplacement de matériau filtrant stratifié selon la revendication 1, dans lequel, le dispositif convient non seulement au traitement des poussières non condensées, mais également au traitement des poussières condensées.

6. Dispositif de filtration de poussière à lit granulaire mobile avec une stratification granulométrique automatique et un remplacement de matériau filtrant stratifié selon la revendication 1, dans lequel, le dispositif est configuré comme suit: les granules de matériau filtrant s'écoulent à travers un corps de lit de haut en bas à partir du passage d'entrée décalée (2), un gaz poussiéreux s'écoule à travers une couche de filtre à granules dans un écoulement transversal pour réaliser une filtration et une purification, et les granules de matériau filtrant et la poussière collectée après l'épuration s'écoulent dans la zone de décharge de matériau et se déchargent de la plate-forme de décharge mobile (14).

7. Dispositif de filtration de poussière à lit granulaire mobile avec une stratification granulométrique automatique et un remplacement de matériau filtrant stratifié selon la revendication 1, dans lequel, la plaque déflectrice de réglage de l'épaisseur de la couche de matériau (5) est configurée pour monter et descendre.

8. Dispositif de filtration de poussière à lit granulaire mobile avec une stratification granulométrique automatique et un remplacement de matériau filtrant stratifié selon la revendication 1, dans lequel, la taille et la position de l'orifice de décharge (13) sont modifiées par une coopération de la plaque de paroi mobile anti-cambrure (10) avec la plaque de paroi de réglage télescopique à décharge stratifiée (17), réalisant un réglage de la vitesse de décharge des granules de matériau filtrant dans une direction horizontale dans la zone de décharge de matériau (18), et réalisant la fonction de remplacement du matériau filtrant stratifié.

9. Dispositif de filtration de poussière à lit granulaire mobile avec une stratification granulométrique automatique et un remplacement de matériau filtrant stratifié selon la revendication 1, dans lequel, la vitesse de déplacement vers le bas des granulés de matériau filtrant dans le lit est contrôlée par la configuration de la vitesse de la plate-forme de décharge mobile (14).
